# DEMANDE DE BREVET EUROPEEN

(11) **EP 0 852 905 A1**
(43) Date de publication de la demande: **15.07.1998**
(21) Numéro de dépôt: 98400030.7
(22) Date de dépôt: 09.01.1998
(51) Int. Cl.: A01J 7/02

(54) **Appareil pour nettoyer les manchons trayeurs d'une installation de traite**

(30) Priorité: 10.01.1997 FR 9700180
(71) Demandeur: A & D, 75008 Paris (FR)
(72) Inventeur: Deboffles, Régis Pierre Arthur, 02300 Chauny (FR)
(74) Mandataire: Bonnetat, Christian

(57) **Abrégé**

- L'invention concerne un appareil pour nettoyer les manchons trayeurs d'une installation de traite automatique, du type comportant :
   . une pluralité de cornets de réception (2) desdits manchons ;
   . un support (3) auquel sont liés lesdits cornets ; et
   . un dispositif commandable d'alimentation en liquide sous pression (4), associé audit support et communiquant avec l'intérieur desdits manchons respectivement introduits dans lesdits cornets, pour les nettoyer.
- Selon l'invention, ledit support (3) comprend un plateau (5) sur lequel sont agencés lesdits cornets par leurs extrémités inférieures ouvertes, et des moyens de collecte (10) dudit liquide après nettoyage desdits manchons sont associés audit plateau, en étant en communication avec les extrémités inférieures desdits cornets.

## Description

La présente invention concerne un appareil pour nettoyer les manchons trayeurs d'une installation de traite automatique.

On sait que, pour des raisons sanitaires évidentes, les manchons trayeurs des installations de traite automatique doivent être nettoyés après chaque animal traité (vaches, chèvres, ...) pour éviter les risques de transmission de maladie (par exemple, mastite). En effet, une petite quantité de lait reste dans les manchons trayeurs, notamment dans leurs fonds reliés à une unité sous vide pour l'aspiration du lait, à la suite d'une opération de traite. Aussi, après chaque traite, les manchons trayeurs, au nombre de quatre pour les vaches, sont amenés à un appareil spécifique, destiné à assurer le nettoyage efficace desdits manchons pour éliminer la quantité de lait restante dans chacun d'eux.

On connaît déjà des appareils de nettoyage qui comportent :
- une pluralité de cornets de réception desdits manchons ;
- un support auquel sont liés lesdits cornets ; et
- un dispositif commandable d'alimentation en liquide sous pression, associé audit support et communiquant avec l'intérieur desdits manchons respectivement introduits dans lesdits cornets, pour les nettoyer.

L'envoi du liquide sous pression, par l'intermédiaire de buses situées au niveau des extrémités inférieures ou petites bases ouvertes respectives des cornets, à l'intérieur desdits manchons introduits dans les cornets, garantit un lavage efficace des manchons.

Néanmoins, bien que donnant des résultats appréciables du point de vue du fonctionnement, ces appareils présentent des inconvénients du point de vue de leur conception structurelle.

Tout d'abord, le liquide après nettoyage s'écoule à travers l'espace prévu entre la buse et la petite base ouverte de chaque cornet, pour tomber directement sur le sol qui se recouvre d'une substance grasse, ce qui nécessite par la suite une opération de lavage du sol. Le liquide s'écoule en outre le long de l'appareil, ce qui n'est pas très agréable lors de sa manipulation.

Par ailleurs, la commande du dispositif d'alimentation par une pédale articulée, via une tringlerie, au support n'est pas d'un usage pratique, et ne permet qu'une action en tout ou rien du liquide de nettoyage sous pression. De plus, l'appareil en lui-même occupe un encombrement important au sol, ce qui est gênant lorsque le lieu de la traite a une surface limitée.

La présente invention a pour but de remédier à ces inconvénients.

A cet effet, l'appareil pour nettoyer les manchons trayeurs d'une installation de traite automatique, du type décrit préalablement, est remarquable, selon l'invention, en ce que ledit support comprend un plateau sur lequel sont agencés lesdits cornets par leurs extrémités inférieures ouvertes, et en ce que des moyens de collecte dudit liquide après nettoyage desdits manchons, sont associés audit plateau, en étant en communication avec les extrémités inférieures desdits cornets.

Ainsi, grâce à l'agencement du plateau de réception desdits cornets et des moyens de collecte, le liquide, après nettoyage des manchons, est avantageusement dirigé vers les moyens de collecte, ce qui évite qu'il ne se répande sur le sol et le long de l'appareil. Par conséquent, le lieu affecté à l'opération de nettoyage des manchons reste propre.

Par exemple, lesdits moyens de collecte sont définis par une enceinte étanche située sous ledit plateau et par une pluralité de passages ménagés dans le plateau et mettant respectivement en communication les extrémités inférieures ouvertes desdits cornets avec ladite enceinte. Ainsi, cet agencement permet l'écoulement du liquide vers l'enceinte après nettoyage desdits manchons disposés dans lesdits cornets.

De préférence, ladite enceinte est fixée avec étanchéité sous ledit plateau, et est pourvue dans son fond, d'un raccord apte à recevoir un tuyau d'évacuation dudit liquide.

En particulier, dans chaque passage dudit plateau, du côté desdits cornets, est agencée une bague qui présente un perçage axial raccordé audit dispositif d'alimentation et portant, du côté cornet, une buse d'éjection dudit liquide sous pression, et qui est pourvue d'un épaulement annulaire externe maintenant en place ledit cornet sur le plateau, et muni d'ouvertures pour l'écoulement dudit liquide après nettoyage, en direction desdits moyens de collecte.

Selon une autre caractéristique, ledit plateau est monté pivotant sur ledit support autour d'une articulation, et commande, par son pivotement, ledit dispositif d'alimentation entre une première position pour laquelle le dispositif d'alimentation est inactif, et une seconde position pour laquelle le dispositif d'alimentation est actif et délivre le liquide sous pression à l'intérieur desdits manchons respectivement disposés dans lesdits cornets. Ainsi, une telle commande du dispositif d'alimentation par le pivotement du plateau est fiable et très accessible et ne nécessite pas le montage d'une tringlerie de commande souvent sujette à des dysfonctionnements.

Avantageusement, une butée réglable est prévue entre ledit plateau pivotant et ledit support pour régler le débit du liquide sous pression délivré par ledit dispositif d'alimentation lorsque ce dernier est actif.

Par ailleurs, un organe élastique est disposé entre ledit plateau pivotant et ledit support pour rappeler spontanément ledit plateau vers sa première position.

Dans un mode préféré de réalisation, ledit dispositif d'alimentation comprend un robinet à temporisation associé audit support et communiquant avec lesdits cornets, ledit robinet étant commandé par le pivotement dudit plateau de sa première position vers sa seconde position. Le débit de liquide délivré par le robinet suite à l'action du plateau, peut être ainsi commandé par le réglage de la butée.

De plus, ladite articulation du plateau sur le support comprend un axe cylindrique parallèle au plan sensiblement horizontal défini par ledit plateau.

Selon une autre caractéristique, ledit support comporte avantageusement deux parties amovibles l'une par rapport à l'autre, une première partie formant socle et susceptible de coopérer avec le sol ou avec une paroi, et une seconde partie portant ledit plateau à moyens de collecte et ledit dispositif d'alimentation. Ainsi, on peut agencer l'appareil soit sur le sol, soit sur un mur, selon l'espace disponible du lieu de traitement.

Les figures du dessin annexé feront bien comprendre comment l'invention peut être réalisée. Sur ces figures, des références identiques désignent des éléments semblables.

La figure 1 montre, en perspective, un exemple de réalisation de l'appareil de nettoyage selon l'invention.

La figure 2 est une vue en coupe, à une échelle agrandie, dudit appareil, montrant notamment le plateau articulé, les moyens de collecte et le dispositif d'alimentation.

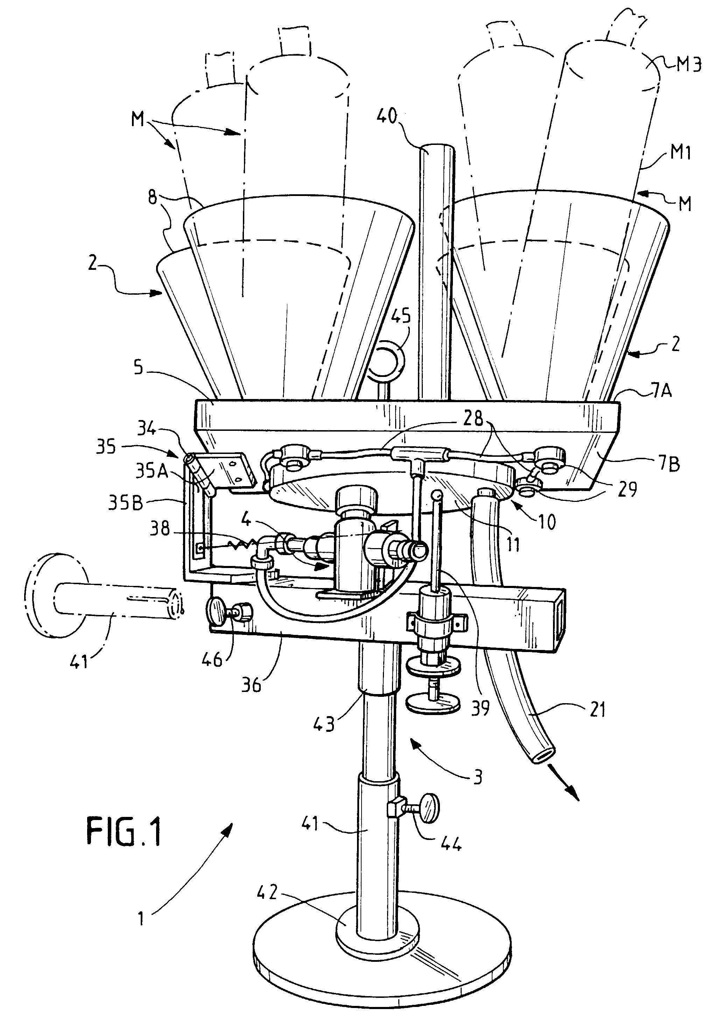

L'appareil 1 illustré sur la figure 1 est destiné à nettoyer les manchons trayeurs M d'une installation de traite automatique non représentée, d'un type connu en soi. Les manchons trayeurs M sont dessinés schématiquement en traits mixtes sur les figures et ils présentent chacun une paroi de forme cylindrique M1 terminée d'un côté, par une extrémité ouverte M2 pour l'introduction du pis de l'animal à traire et, de l'autre côté, par un fond M3 raccordé à une unité sous vide pour l'aspiration du lait.

L'appareil 1 comporte une pluralité de cornets 2 de forme sensiblement tronconique pour la réception des manchons, un support 3 auquel sont liés les cornets, et un dispositif commandable d'alimentation en liquide sous pression 4 tel que de l'eau additionnée éventuellement d'un produit de lavage approprié.

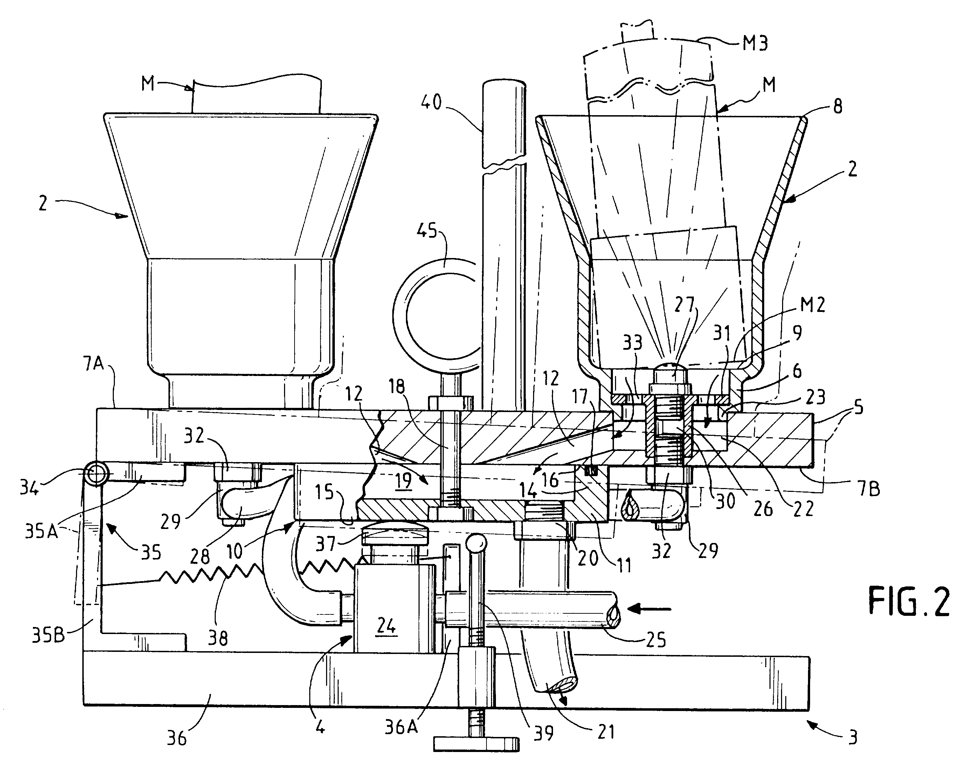

Avantageusement, le support 3 comprend un plateau 5 qui est disposé sensiblement horizontalement et qui porte les cornets de réception 2 alors dressés sensiblement verticalement. En particulier, les extrémités inférieures ouvertes ou petites bases 6 des cornets sont associées au dessus 7A du plateau 5. Grâce à la forme tronconique des cornets, s'évasant depuis leur extrémité inférieure 6 vers leur extrémité supérieure ou grande base 8, les manchons M sont guidés et centrés automatiquement dans les cornets respectifs, lors de leur introduction par leur extrémité ouverte M2 dans les cornets. Comme le montre la figure 2, l'extrémité ouverte M2 du manchon représenté repose au moins partiellement sur un épaulement interne 9 prévu dans l'extrémité inférieure 6 du cornet.

L'appareil 1 comprend de plus, selon l'invention, des moyens de collecte 10 du liquide après nettoyage des manchons M, qui sont associés au plateau 5 pour communiquer avec lesdits cornets. Dans l'exemple de réalisation illustré sur les figures 1 et 2, les moyens de collecte 10 sont définis par une enceinte étanche 11 et par des passages 12 prévus dans le plateau pour mettre en communication l'enceinte avec les cornets. Plus particulièrement, l'enceinte 11 se présente sous la forme d'un couvercle circulaire creux, dont la paroi latérale 14 issue du fond 15, s'applique par son bord libre 16 contre le dessous 7B du plateau 5 via un joint d'étanchéité 17. Un organe de fixation 18 du type vis-écrou assure l'immobilisation du couvercle, par son fond, sous le plateau 5. L'enceinte 11 est située au centre du plateau et elle définit un espace interne étanche 19 apte à recevoir le liquide après nettoyage des manchons. De plus, dans le fond 15 du couvercle, il est prévu un raccord 20 pour l'adaptation d'un tuyau d'évacuation 21 du liquide, en direction d'un réservoir ou d'un canal de récupération non représenté.

En ce qui concerne les passages 12, ils débouchent d'un côté dans l'espace interne 19 de l'enceinte étanche 11 et, de l'autre côté, dans des trous borgnes respectifs 22 dans lesquels s'adaptent des rebords 23 terminant les extrémités inférieures 6 desdits cornets. Dans cet exemple, quatre cornets 2 sont prévus en étant équi-angulairement répartis les uns par rapport aux autres autour du centre du plateau et ces cornets communiquent avec quatre trous borgnes 22 des passages.

Par ailleurs, le dispositif commandable d'alimentation 4 est fixé au support 3, proche du plateau 5, et il comprend un robinet à temporisation 24 qui est raccordé d'un côté, à l'alimentation en liquide sous pression par une conduite souple 25 et, de l'autre côté, à des bagues 26 pourvues de buses d'éjection 27 et logées dans les trous respectifs 22, via des conduites souples 28 et des raccords 29. On voit notamment sur la figure 2, le montage d'une telle bague 26, identique aux trois autres, dans le trou correspondant 22. En particulier, chaque bague cylindrique 26 présente un perçage axial 30 et un épaulement annulaire externe 31. Ainsi, dans le perçage axial, du côté cornet, il est monté par vissage la buse d'éjection 27 du liquide de nettoyage et, du côté plateau, il est monté là aussi par vissage, le raccord creux 29. Une tête de vissage 32 du raccord s'applique sous le plateau pour immobiliser le raccord, ainsi que la bague 26 contre le fond du trou 22, ce qui maintient, simultanément, en position verticale le cornet 2 grâce à l'action de l'épaulement 31 de la bague sur le rebord 23 du cornet. Le serrage de la tête 32 du raccord garantit ainsi la fixation de l'ensemble bague-cornet au plateau.

En outre, des ouvertures traversantes 33 sont ménagées dans l'épaulement annulaire externe des bagues pour mettre en communication l'intérieur des cornets 2 avec les passages 12.

Selon une autre caractéristique de l'appareil 1, la commande du robinet 24 du dispositif 4 est directement obtenue par une action manuelle sur le plateau. Pour cela, ce dernier est monté pivotant par rapport au reste du support 3, autour d'une articulation cylindrique constituée d'un axe 34, parallèle au plateau, et d'une charnière 35 à deux ferrures assemblées entre elles par ledit axe. L'articulation est située en périphérie du plateau, et l'une des ferrures 35A de la charnière est fixée sous le plateau 5, tandis que l'autre ferrure 35B est solidaire d'un profilé 36 du support. Le robinet 24 est alors rapporté fixement sur ce profilé qui est sensiblement parallèle au plateau, et sa tête d'actionnement 37, du type bouton-poussoir, est agencée pour être au contact extérieur du fond 15 de l'enceinte étanche 11 solidaire du plateau. Par ailleurs, un organe élastique tel qu'un ressort 38, est disposé entre la ferrure 35A liée au plateau et une patte 36A soudée au profilé, et une butée réglable 39 du type vis-écrou est associée au profilé 36 et permet de régler le pivotement angulaire du plateau et, donc, le débit de liquide délivré par le robinet à temporisation 24.

Le fonctionnement de l'appareil de nettoyage 1 est le suivant.

Tout d'abord, les manchons trayeurs M à nettoyer sont introduits dans les cornets de guidage 2, de façon que les extrémités inférieures ouvertes M2 soient au contact des épaulements respectifs 9 desdits cornets, les buses d'éjection 27 étant situées à fleur desdits épaulements. Les manchons sont alors maintenus approximativement verticalement.

Sur les figures 1 et 2, le plateau 5 occupe une première position pour laquelle le dispositif d'alimentation 4 est inactif. En effet, le fond 15 de l'enceinte étanche est juste maintenu au contact de la tête 37 du robinet, sans le presser, par l'action du ressort 38. La butée 39 est réglée au débit souhaité par l'opérateur sachant qu'à une faible course correspond une temporisation courte du robinet, donc une action instantanée du liquide sous pression, et qu'à une grande course correspond une temporisation plus longue du robinet, donc une action plus longue dudit liquide.

Pour procéder au nettoyage de l'intérieur des manchons trayeurs M, l'opérateur appuie de préférence sur un poussoir 40 dressé verticalement sur le plateau et dépassant les cornets pour être ainsi facilement accessible. L'action sur le poussoir 40 entraîne le pivotement du plateau 5 autour de l'axe d'articulation 34 de la première vers la seconde position, laquelle est représentée en traits mixtes sur la figure 2. Il s'ensuit un enfoncement de la tête 37 du robinet, jusqu'à ce que le fond 15 de l'enceinte étanche 11 touche l'extrémité de la butée réglable 39 qui détermine la seconde position du plateau.

A ce moment, le liquide sous pression circule dans les conduites souples 28, les raccords 29, puis dans les perçages axiaux 30 des bagues 26, pour être éjecté via les buses 27, en direction de l'intérieur des manchons M, jusqu'à atteindre leur fond M3 afin de les nettoyer parfaitement.

Après quoi, le liquide s'écoule le long des manchons puis traverse les ouvertures 33 prévues dans les épaulements 31 des bagues, pour se diriger dans les trous 22 puis dans les passages 12 ménagés dans le plateau. Le liquide recueilli après nettoyage s'écoule dans l'espace interne 19 de l'enceinte étanche pour être ensuite évacué via le tuyau 21 en direction d'un réservoir ou d'un canal d'eaux usées.

Lorsque le nettoyage des manchons est convenablement effectué, l'opérateur relâche le poussoir 40, si bien que le plateau 5 retourne spontanément vers sa première position grâce à l'action du ressort 38, permettant la remontée de la tête 37 du robinet 24, ce qui interrompt alors l'alimentation en liquide sous pression.

On remarque par ailleurs sur la figure 1, que le support 3 comprend deux parties amovibles l'une par rapport à l'autre. Une première partie tubulaire 41 venant au contact du sol par une embase 42, et une seconde partie tubulaire 43 montée coulissante dans la première partie et portant le profilé 36 disposé perpendiculairement à celle-ci. Un élément de serrage 44 assure la fixation desdites parties entre elles.

Sur cette figure 1, les deux parties sont emboîtées l'une dans l'autre et forment un piétement pour l'appareil.

Avantageusement, l'appareil 1 peut également être fixé à un mur afin d'occuper une moindre place. Pour cela, la première partie tubulaire 41 représentée en traits mixtes sur la figure 1 est désolidarisée de la seconde partie 43 puis, après sa fixation au mur, introduite dans le profilé creux 36 et fixée à celui-ci par un élément de serrage 46. Pour faciliter la manipulation de l'appareil, un anneau de préhension 45 prolonge l'organe de fixation 18.

## Revendications

1. Appareil pour nettoyer les manchons trayeurs d'une installation de traite automatique, du type comportant :
- une pluralité de cornets de réception (2) desdits manchons ;
- un support (3) auquel sont liés lesdits cornets ; et
- un dispositif commandable d'alimentation en liquide sous pression (4), associé audit support et communiquant avec l'intérieur desdits manchons respectivement introduits dans lesdits cornets, pour les nettoyer,
caractérisé en ce que ledit support (3) comprend un plateau (5) sur lequel sont agencés lesdits cornets par leurs extrémités inférieures ouvertes, et en ce que des moyens de collecte (10) dudit liquide après nettoyage desdits manchons sont associés audit plateau, en étant en communication avec les extrémités inférieures desdits cornets.

2. Appareil selon la revendication 1,
caractérisé en ce que lesdits moyens de collecte (10) sont définis par une enceinte étanche (11) située sous ledit plateau (5) et par une pluralité de passages (12) ménagés dans le plateau et mettant respectivement en communication les extrémités inférieures ouvertes desdits cornets avec ladite enceinte.

3. Appareil selon la revendication 2,
caractérisé en ce que ladite enceinte (11) est fixée avec étanchéité sous ledit plateau (5), et est pourvue dans son fond (15), d'un raccord (20) apte à recevoir un tuyau d'évacuation dudit liquide.

4. Appareil selon l'une des revendications 2 à 3,
caractérisé en ce que, dans chaque passage (12) dudit plateau, du côté desdits cornets, est agencée une bague (26) qui présente un perçage axial (30) raccordé audit dispositif d'alimentation (4) et portant, du côté cornet, une buse d'éjection (27) dudit liquide sous pression, et qui est pourvue d'un épaulement annulaire externe (31) maintenant en place ledit cornet sur le plateau, et muni d'ouvertures (33) pour l'écoulement dudit liquide après nettoyage, en direction desdits moyens de collecte.

5. Appareil selon l'une quelconque des revendications précédentes 1 à 4,
caractérisé en ce que ledit plateau (5) est monté pivotant sur ledit support autour d'une articulation (34, 35), et commande, par son pivotement, ledit dispositif d'alimentation (4) entre une première position pour laquelle le dispositif d'alimentation est inactif, et une seconde position pour laquelle le dispositif d'alimentation est actif et délivre le liquide sous pression à l'intérieur desdits manchons respectivement disposés dans lesdits cornets.

6. Appareil selon la revendication 5,
caractérisé en ce qu'une butée réglable (39) est prévue entre ledit plateau pivotant (5) et ledit support (3) pour régler le débit du liquide sous pression délivré par ledit dispositif d'alimentation (4) lorsque ce dernier est actif.

7. Appareil selon l'une des revendications 5 et 6,
caractérisé en ce qu'un organe élastique (38) est disposé entre ledit plateau pivotant (5) et ledit support (3) pour rappeler spontanément ledit plateau (5) vers sa première position.

8. Appareil selon l'une quelconque des revendications précédentes 1 à 7,
caractérisé en ce que ledit dispositif d'alimentation (4) comprend un robinet à temporisation (24) associé audit support (3) et communiquant avec lesdits cornets (2), ledit robinet étant commandé par le pivotement dudit plateau de sa première position vers sa seconde position.

9. Appareil selon l'une quelconque des revendications 1 à 8,
caractérisé en ce que ladite articulation du plateau (5) sur le support (3) comprend un axe cylindrique (34) parallèle au plan sensiblement horizontal défini par ledit plateau.

10. Appareil selon l'une quelconque des revendications précédentes 1 à 9,
caractérisé en ce que ledit support comporte deux parties (41, 43) amovibles l'une par rapport à l'autre, une première partie (41) formant socle et susceptible de coopérer avec le sol ou avec une paroi, et une seconde partie (43) portant ledit plateau à moyens de collecte et ledit dispositif d'alimentation.
